# FASCICULE DE BREVET EUROPEEN

(11) **EP 3 822 500 B1**
(45) Date de publication et mention de la délivrance du brevet: **20.04.2022**
(21) Numéro de dépôt: 20206085.1
(22) Date de dépôt: 06.11.2020
(51) Int. Cl.: F16C 19/06, D03C 5/00, D03C 5/02, F16C 19/26, F16C 33/58, D03C 1/14

(54) **ROULEMENT POUR MACHINE DE FORMATION DE LA FOULE OU SYSTÈME DE TRANSMISSION DE MOUVEMENT, LEVIER DE MÉCANIQUE D'ARMURE COMPRENANT UN TEL ROULEMENT ET MACHINE DE FORMATION DE LA FOULE COMPRENANT UN TEL LEVIER OU UN TEL ROULEMENT**
LAGER FÜR EINE FACHBILDEMASCHINE ODER BEWEGUNGSÜBERTRAGUNGSSYSTEM, HEBEL MIT SCHAFTMASCHINENMECHANIK, DER EIN SOLCHES LAGER UMFASST, UND FACHBILDEMASCHINE MIT EINEM SOLCHEN HEBEL ODER LAGER
BEARING FOR A SHEDDING MACHINE OR SYSTEM FOR TRANSMITTING MOVEMENT, MECHANICAL DOBBY COMPRISING SUCH A BEARING AND SHEDDING MACHINE COMPRISING SUCH A DOBBY OR SUCH A BEARING

(30) Priorité: 15.11.2019 FR 1912808
(43) Date de publication de la demande: 19.05.2021
(73) Titulaire: Staubli Faverges, 74210 Faverges-Seythenex (FR)
(72) Inventeur: POLLET, François, 74940 Annecy le Vieux (FR); MARION, Sébastien, 74210 DOUSSARD (FR)
(74) Mandataire: Lavoix

(56) Documents cités:
- EP-A1- 0 225 266
- CN-A- 107 965 517
- CN-Y- 2 459 480
- DE-B3-102008 032 718
- FR-A3- 2 657 892

## Description

La présente invention concerne un roulement pour une machine de formation de la foule ou pour un système de transmission de mouvement aux cadres d'un métier à tisser, ainsi qu'un levier de mécanique d'armure comprenant un tel roulement. L'invention concerne aussi une machine de formation de la foule, comprenant un tel levier ou un tel roulement.

Dans le domaine du tissage, un métier à tisser réalise le croisement des fils de chaine et de fils de trame pour confectionner un tissu selon une armure. Une machine de formation de la foule commande les mouvements des fils de chaîne, au moyen de lisses qui sont montées sur un cadre de lisses ; plusieurs cadres de lisses étant prévus en fonction de la complexité de l'armure du tissu à réaliser.

Il est connu de commander chaque cadre de lisses individuellement, entre une position haute et une position basse, au moyen d'un système de transmission mécanique, comprenant des éléments de tirage, à savoir des bielles et des leviers. Certains des leviers comportent des galets, munis de roulements actionnés par des cames rotatives. Une machine de formation de la foule regroupant les cames et d'autres organes de commande des cadres de lisses est dite de type « machine à cames », et le système de transmission mécanique reliant la machine de formation de la foule et les cadres de lisse, situés dans le métier à tisser, est dit « système de transmission de mouvement » aux cadres du métier à tisser.

EP 0 225 266 A1 enseigne, par exemple, une structure de levier de machine à cames, ce levier comportant deux galets, actionnés conjointement par une came rotative comprenant deux pistes respectives. Pour réduire les frottements, chaque galet comprend un roulement, constitué d'une bague intérieure et d'une bague extérieure en contact linéique avec une piste respective de la came, la bague extérieure étant mobile en rotation par rapport à la bague intérieure du roulement au moyen d'éléments roulants interposés entre les bagues intérieure et extérieure. La bague intérieure est pleine et rigide. De tels roulements, soumis à des efforts répétitifs, ont une durée de vie limitée à cause de la fatigue des matériaux soumis localement à des efforts importants et de façon répétée. EP 0 225 266 A1 divulgue un roulement selon le préambule de la revendication 1.

Pour des raisons de productivité, une machine de formation de la foule fonctionne à haute fréquence : les cames tournent à haute vitesse, l'entrainement d'un cadre de lisses entre ses deux positions haute et basse sollicite fortement les éléments de tirage. Chaque galet, en particulier, se déplace à haute vitesse en fonction du profil d'une came et subit des charges particulièrement importantes, qui dépendent du contact entre une piste de la came et la bague extérieure du galet et qui sont liées à des accélérations définies par le profil de came. Les mouvements d'une machine de formation de la foule, et donc de ses galets, étant alternatifs, les roulements des galets sont soumis à des répétitions de cycles d'efforts très localisés sur une zone de charge, ce qui est propice à la fatigue des matériaux, à l'endommagement prématuré des pièces et peut mener à des ruptures des composants des galets.

Du fait de l'effort localisé sur le galet lors du contact galet-came, la bague extérieure du roulement est chargée et tend à s'ovaliser, sous l'effet d'une déformation centripète au niveau de la zone de charge galet-came et d'une déformation centrifuge sur des secteurs adjacents à la zone de charge. Or, la bague intérieure du roulement, pleine et rigide, ne se déforme que très peu voire pas du tout, ce qui, géométriquement, entraine une perte de contact ou de charge des éléments roulants extérieurs à la zone de charge, et une augmentation de charge sur l'élément roulant dans l'axe des efforts, ce qui exacerbe encore plus les effets de fatigue des matériaux des éléments roulants et des pistes.

L'approche connue pour réduire la fatigue des matériaux consiste à utiliser des pièces plus épaisses, donc plus lourdes, qui engendrent des effets inertiels accrus, entrainant des forces plus importantes au niveau des éléments roulants, ce qui limite les bénéfices attendus en termes de réduction de la fatigue des matériaux, donc en termes de durée de vie des roulements. Ces pièces plus épaisses pouvant également poser des problèmes de coût et de dimensionnement des composantes du roulement dans un espace réduit déterminé par l'encombrement machine.

C'est à ces problèmes qu'entend plus particulièrement remédier l'invention, en proposant une structure de roulement qui permet une réduction de la fatigue des matériaux lors des cycles de charge dans un espace de réalisation semblable.

À cet effet, l'invention concerne un roulement selon la revendication 1 destiné à une machine de formation de la foule ou à un système de transmission de mouvement aux cadres d'un métier à tisser. Le roulement comprend une bague intérieure, une bague extérieure et des éléments roulants. La bague intérieure est centrée sur un axe principal, comprend deux surfaces latérales normales à l'axe principal et définit un chemin de roulement périphérique circulaire centré sur l'axe principal. La bague extérieure définit un chemin de roulement interne, qui est circulaire et centré sur l'axe principal. Les éléments roulants sont interposés, radialement par rapport à l'axe principal, entre le chemin de roulement périphérique et le chemin de roulement interne, de manière à guider en rotation la bague extérieure externe par rapport à la bague intérieure autour de l'axe principal. Selon l'invention, la bague intérieure comprend au moins une lumière, qui débouche sur les deux surfaces latérales, qui s'étend en regard d'une portion du chemin de roulement périphérique et qui forme un pont de matière entre la lumière et le chemin de roulement périphérique. Le pont de matière s'étend sur un secteur angulaire de la bague intérieure, le secteur angulaire étant centré sur l'axe principal du roulement et présentant un angle au sommet supérieur ou égal à l'angle au sommet d'un secteur angulaire occupé par deux éléments roulants, de préférence supérieur ou égal à l'angle au sommet d'un secteur angulaire occupé par cinq éléments roulants, de préférence supérieur ou égal à l'angle au sommet d'un secteur angulaire occupé par neuf éléments roulants, de préférence encore supérieur ou égal à l'angle au sommet d'un secteur angulaire occupé par treize éléments roulants. La bague intérieure comprend en outre au moins un trou de fixation du roulement.

Grâce à l'invention, la bague intérieure, plus précisément le pont de matière situé entre la lumière et le chemin de roulement périphérique, se déforme élastiquement de manière à ovaliser la déformation de la bague intérieure et ainsi répartir la charge sur un nombre d'éléments roulants accru par rapport aux roulements connus, ce qui limite la fatigue des matériaux et réduit le risque d'endommagement prématuré et de rupture accidentelle des pièces. D'autre part, les charges supportées par chaque élément roulant sont plus homogènes, ce qui évite les pics de contraintes et réduit d'avantage la fatigue des matériaux.

Selon des aspects avantageux mais non obligatoires de l'invention, un tel roulement peut incorporer une ou plusieurs des caractéristiques suivantes prises selon toute combinaison techniquement admissible :
- l'angle au sommet du secteur angulaire de la bague intérieure est supérieur à 20°, de préférence supérieur à 70°, de préférence encore supérieur à 120° ;
- le pont de matière s'étend avec une largeur radiale constante et selon un arc de cercle centré sur l'axe principal de la bague intérieure ;
- la largeur radiale est sensiblement égale à une largeur radiale de la lumière ;
- la largeur radiale du pont de matière est inférieure à 30%, de préférence inférieure à 20%, de préférence encore inférieure à 10% d'un rayon du chemin de roulement périphérique de la bague intérieure ;
- la lumière s'étend entre deux extrémités arrondies de diamètre égal à la largeur de la lumière ;
- les éléments roulants sont des rouleaux ;
- les éléments roulants sont des billes ;
- plusieurs lumières sont ménagées dans la bague intérieure ;
- la bague comprend deux lumières diamétralement opposées par rapport à l'axe central ;
- la bague intérieure comprend une lumière et deux trous de fixations.

L'invention concerne aussi un levier de sortie à galets suiveurs de mécanique d'armure à cames, le levier étant équipé de deux galets. Au moins un des galets comporte un roulement tel que décrit précédemment. La bague intérieure du roulement est fixée sur une âme du levier ou/et sur un flasque rapporté sur le levier au moyen d'organes de fixation, la bague extérieure présentant une piste de roulement périphérique à profil circulaire.

L'invention concerne aussi une machine de formation de la foule de type machine à cames, dans laquelle la machine de formation de la foule comprend un levier de sortie tel que décrit précédemment.

Avantageusement, le levier de sortie oscille autour d'un axe principal de la machine à cames entre une position haute et une position basse en fonction d'un profil de came agissant par contact sur la piste de roulement périphérique d'un des galets, le contact étant réalisé dans une zone de charge radiale alignée avec le secteur angulaire de la bague intérieure dans lequel est ménagée la lumière.

Selon un autre aspect, l'invention concerne enfin une machine de formation de la foule de type machine à cames ou de type ratière, comprenant un système de transmission mécanique au métier à tisser conçu autour d'articulations d'axes parallèles entre eux, dans laquelle l'une des articulations comprend un roulement tel que décrit précédemment.

De plus on peut prévoir que le pont de matière s'étend de chaque côté d'une ligne médiane dirigée selon intensité maximale de la force de contact entre le galet et la came, ou dirigée selon l'effort radial maximal sur une des articulations du système de transmission qui comprend un roulement, l'effort radial maximal correspondant à la charge radiale, appliquée sur les éléments roulants, la plus élevée au cours d'un cycle de formation de foule.

L'invention sera mieux comprise, et d'autres avantages de celle-ci apparaîtront plus clairement à la lumière de la description qui va suivre, de trois modes de réalisation d'un roulement conforme à l'invention, d'un levier de sortie à galets suiveurs conforme à l'invention et d'une machine de formation de la foule également conforme à l'invention, donnée uniquement à titre d'exemple et faite en référence aux dessins annexés, dans lesquels :
[Fig 1] la figure 1 est une vue schématique d'une machine de formation de la foule, comprenant des roulements conformes à un premier et à un troisième mode de réalisation de l'invention, la machine de formation de la foule étant représentée dans une première configuration ;
[Fig 2] la figure 2 est une vue d'une partie de la machine de formation de la foule de la figure 1, la machine de formation de la foule étant représentée dans une deuxième configuration ;
[Fig 3] la figure 3 est une coupe partielle, suivant un plan A-A représenté sur la figure 1 ;
[Fig 4] la figure 4 est une vue de face d'un roulement représenté en coupe à la figure 3 ;
[Fig 5] la figure 5 est une vue en perspective d'une bague intérieure du roulement de la figure 4;
[Fig 6] la figure 6 est une vue de face, analogue à la figure 4, d'un roulement selon l'état de la technique, illustrant le comportement de ce roulement sous l'effet d'une charge ;
[Fig 7] la figure 7 est une vue de face du roulement de la figure 3, illustrant le comportement du roulement sous l'effet d'une charge analogue à celle de la figure 6 ;
[Fig 8] la figure 8 est une vue de face analogue à la figure 4, d'un roulement conforme à un deuxième mode de réalisation de l'invention ;
[Fig 9] la figure 9 est une vue de face à plus grande échelle du détail IX de la figure 1, représentant un organe de transmission de mouvement comprenant un roulement conforme au troisième mode de réalisation de l'invention ;
[Fig 10] la figure 10 est une coupe, suivant un plan B-B représenté en figure 9 ; et
[Fig 11] la figure 11 est une vue de face du roulement de la figure 8.

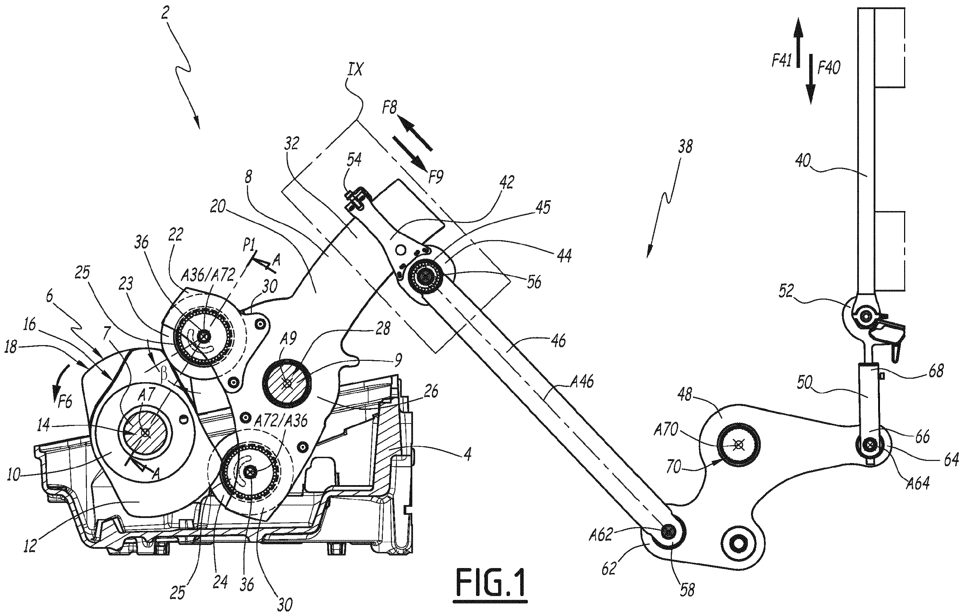

La figure 1 représente une machine de formation de la foule 2, qui est représentée schématiquement pour faciliter la lecture. La machine de formation de la foule 2 est ici une machine à cames.

La machine 2 comprend un bâti 4, un jeu de cames principale 6 et un jeu de leviers de sortie 8. En pratique, plusieurs cames principales 6 sont montées sur un arbre commun 7 et juxtaposées le long d'un axe longitudinal A7 de cet arbre 7. De même, plusieurs leviers 8 sont montés sur un arbre commun 9 et juxtaposés le long d'un axe longitudinal A9 de cet arbre 9. Le bâti 4 est fixe lors de l'utilisation de la machine 2 et comprend les divers organes nécessaires au positionnement des autres éléments de la machine de formation de la foule 2 et à l'entrainement des leviers 8. Un couvercle non représenté ferme le bâti 4 sur le haut et permet le passage des leviers 8. Dans la suite de cette description, la came 6 et le levier 8 dont il est question sont ceux visibles à la figure 1.

La came 6 comprend une portion centrale 10 et une portion périphérique 12. La portion centrale 10 présente une forme cylindrique de section circulaire centrée sur l'axe A7. Un alésage 14 est ménagé au travers de la portion centrale 10, l'alésage 14 étant centré sur l'axe A7.

La portion périphérique 12 se déploie radialement à la portion centrale 10 par rapport à l'axe A7 et définit deux pistes 16 et 18, les pistes 16 et 18 présentant chacune un profil avec une surface radiale en décalage par rapport à un plan du levier 8 et prévue pour être en contact avec d'autres éléments mécaniques, ainsi que décrit plus loin dans la présente description.

Dans l'exemple illustré, la came 6 est réalisée d'une seule pièce en métal, les pistes 16 et 18 étant réalisées par usinage.

La came 6 est montée sur l'arbre 7 coopérant avec l'alésage 14 et centré sur l'axe A7. La came 6 est ainsi mobile en rotation par rapport au bâti 4 autour de l'axe A7, le mouvement de rotation de la came 6, représenté par la flèche F6 sur la figure 1, étant commandé par des moyens d'entraînement non représentés et connus en soi.

Le levier de sortie 8 comprend une âme 20, deux flasques 22 et deux galets d'entraînement 23 et 24. Les galets 23 et 24 comprennent chacun un roulement 25, qui est conforme à un premier mode de réalisation de l'invention.

L'âme 20 du levier 8 est ménagée dans une plaque, de préférence métallique, et comprend une partie centrale 26, qui est traversée par un alésage 28 de forme circulaire et centrée sur l'axe A9.

L'axe A9 est parallèle à l'axe A7, le levier de sortie 8 étant monté pivotant par rapport au bâti 4 autour de l'axe A9 au moyen de paliers coopérant avec l'alésage 28 et avec l'arbre 9. Ces paliers ne sont pas représentés.

L'âme 20 du levier 8 comprend, en outre, deux extensions 30 et un bras 32. Les deux extensions 30 et le bras 32 sont reliés à la partie centrale 26, les extensions 30 et le bras 32 se déployant radialement à l'axe A9 suivant des directions différentes les unes des autres.

Dans l'exemple illustré, le bras 32 et l'une des deux extensions 30 se déploient chacun dans une direction opposée l'une à l'autre par rapport à l'axe A9, tandis que l'autre extension 30 se déploie dans une direction formant un angle droit avec la direction de la première extension, le sommet de l'angle droit étant situé sur l'axe A9.

Les deux flasques 22 sont solidarisés chacun respectivement à l'une ou l'autre face latérale de l'âme 20 du levier 8 au moyen d'organes de fixation 34 et présentent, dans une direction parallèle à l'axe A9, un profil superposé au profil des extensions 30 respectives.

Dans l'exemple illustré, les flasques 22 sont réalisées en métal, et les organes de fixation 34 sont, par exemple, formés d'un couple vis-écrou, ou bien d'un rivet.

Chacun des flasques 22 définit, en coopération avec l'extension 30 sur laquelle ce flasque 22 est fixé, un volume d'accueil de l'un des deux galets d'entraînement 23 ou 24 situé sur le long de l'une des deux faces latérales de l'âme 20. Sur la figure 1, le galet 23 est situé plus haut que le galet 24.

Avantageusement, les roulements 25 des galets 23 et 24 présentent une même structure et fonctionnent de la même façon. La structure détaillée des roulements 25 est décrite plus loin dans la présente description.

Chacun des galets d'entraînement 23 ou 24 est monté, par l'intermédiaire d'un roulement 25, sur le levier de sortie 8 au moyen d'organes de fixation 36, qui coopèrent conjointement avec un flasque 22 et l'âme 20 du levier 8.

Chacun des organes de fixation 36 définit un axe A36, qui est parallèle à l'axe A9 du levier de sortie 8 et donc à l'axe A7 de la came 6.

Dans l'exemple illustré, les organes de fixation 36 sont des rivets.

La forme de la came 6, en particulier les profils des pistes 16 et 18, ainsi que le positionnement relatif de la came 6, du levier de sortie 8 et des galets d'entraînement 23 et 24 sont conçus de manière à assurer un contact permanent de chacun des galets d'entraînement 23 ou 24 avec l'une des pistes 16 ou 18 respectives.

On comprend que le mouvement continu de rotation de la came 6, représenté par la flèche F6, est transformé en mouvement alternatif d'oscillation du levier de sortie 8. Le mouvement d'oscillation du levier 8 autour de l'axe principal A9 est représenté par les flèches F8 et F9 sur la figure 1, les flèches F8 et F9 représentant les mouvements d'une extrémité du bras 32 éloignée de l'axe A9.

La machine à cames 2 comprend, en outre, un système de transmission mécanique 38, qui relie le levier de sortie 8 à un cadre de lisses 40. Dans l'exemple illustré, le système de transmission 38 comprend une agrafe réglable 42, un galet de transmission 44 avec un roulement 45, une bielle d'attaque 46, un levier d'attaque 48, une biellette 50 et une attache au cadre 52 reliée à une extrémité de cadre 40. Une bielle non représentée articulée sur le levier d'attaque 48 relie celui-ci à un autre levier du même type situé à proximité d'une autre extrémité du cadre 40 qui n'est pas visible sur les figures.

Le roulement 45 du galet 44 est un roulement conforme à un deuxième mode de réalisation de l'invention, qui est décrit en détail plus loin dans la présente description.

La position de l'agrafe 42 le long du bras 32 est réglable par un utilisateur, au moyen d'un organe de réglage 54 influant les paramètres géométriques de foule du cadre 40. Le galet 44 est fixé à l'agrafe 42. Une fois la position de l'agrafe 42 par rapport au bras 32 définie, le galet de transmission 44 est solidaire du bras 32, c'est-à-dire que le galet de transmission 44 suit les mouvements d'oscillation du bras 32 indiqués par les flèches F8 et F9.

Le galet de transmission 44 définit un axe de pivotement A44, l'axe de pivotement étant parallèle aux axes A9 et A7.

La bielle d'attaque 46 présente une forme allongée, qui définit un axe longitudinal A46, et comprend une première extrémité 56 et une deuxième extrémité 58, opposée à la première extrémité 56.

La première extrémité 56 est montée mobile en rotation sur le galet de transmission 44 autour de l'axe de pivotement A44.

L'agrafe réglable 42, le galet de transmission 44 et la bielle d'attaque 46 assurent ensemble une liaison cinématique pivot autour de l'axe A44. La structure du galet de transmission 44 et de l'assemblage aux bielles d'attaque 46 et agrafes 42 est détaillée plus loin dans la présente description.

Le levier d'attaque 48 comprend un corps 60, qui est réalisé dans une plaque, qui comprend une forme de double chicane en L et qui définit une première extrémité 62 et une deuxième extrémité 64, opposée à la première extrémité 62. La première extrémité 62 présente un alésage, qui est centré sur un axe A62 et qui accueille des organes de liaison, non représentés, aptes à assurer une mobilité en rotation de la bielle 46 par rapport au levier 48 autour de l'axe A62.

De façon analogue, la deuxième extrémité 64 comprend un alésage, non représenté, qui est centré sur un axe A64 et accueille des organes de liaison aptes à relier une première extrémité 66 de la biellette 50 à la deuxième extrémité 64 du levier 48, de manière à autoriser la mobilité en rotation de la biellette 50 par rapport au levier 48 autour de l'axe A64.

La biellette 50 comprend, en outre, une deuxième extrémité 68, opposée de la première extrémité 66, sur laquelle est fixée l'attache au cadre 52.

Le levier d'attaque 48 comprend, en outre, un alésage central 70, situé à distance des première et deuxième extrémités 62 et 64 et centré sur un axe A70. L'alésage central 70 accueille des organes de liaison, qui sont, d'une part, solidaires d'un bâti non représenté du métier à tisser incluant le cadre 40 et qui, d'autre part, autorisent les mouvements de rotation du levier d'attaque 48 autour de l'axe A70.

Les axes A62, A64 et A70 sont parallèles entre eux et aux axes A7 et A9.

On comprend que le système de transmission mécanique 38, qui comprend plusieurs articulations autours des axes A62, A64 et A70, permet de transmettre le mouvement oscillant du levier de sortie 8, indiqué par les flèches F8 et F9, en un mouvement oscillant vertical amplifié du cadre de lisses 40, indiqué par les flèches F40 et F41.

Le cadre de lisse 40 oscille entre deux positions haute et basse, et par extension on dit que le levier 8 oscille lui-aussi entre deux positions haute et basse.

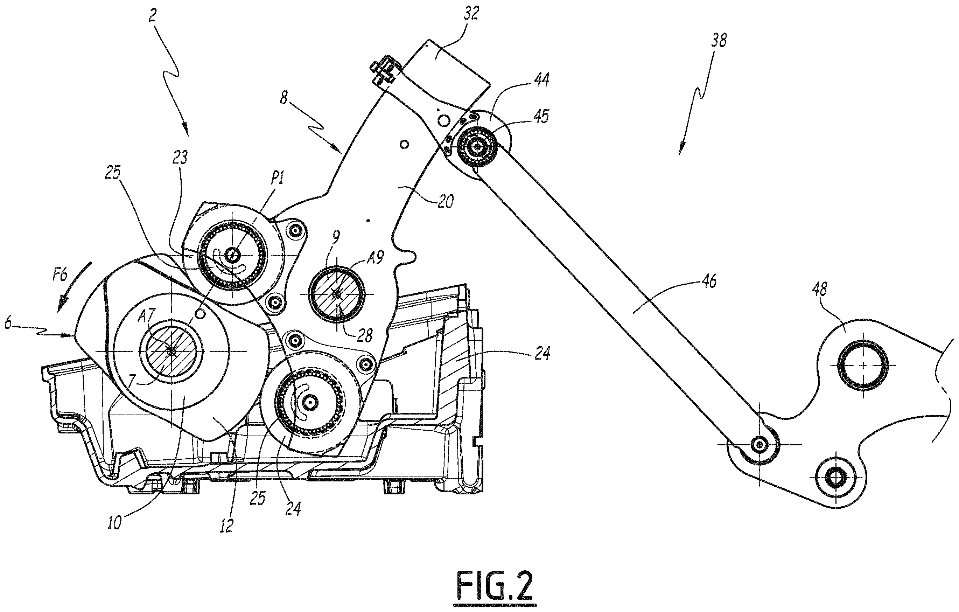

Sur la figure 1, la came 6 est représentée dans une première position angulaire par rapport au bâti autour de l'axe A7. Sur la figure 2, la came 6 est représentée dans une deuxième position angulaire par rapport au bâti 4, différente de la position angulaire représentée sur la figure 1. Lorsque la came 6 effectue un tour complet autour de l'axe A7, la machine 2 effectue un cycle dit « de formation de la foule ».

Le galet 23 se rapproche de l'axe A7 en passant de la configuration de la figure 1 à la configuration de la figure 2 par rotation de la came 6 suivant la direction de la flèche F6, ce qui se traduit par un mouvement de pivotement du levier 8 autour de l'axe A9 dans la direction de la flèche F8. Lorsque la rotation de la came 6 suivant la direction de la flèche F6 se poursuit, le profil des pistes 16 et 18, coopérant conjointement avec les galets d'entraînement 23 et 24, génère de façon continue le mouvement alternatif d'oscillation suivant les directions des flèches F8 et F9, ce mouvement étant repris par le système de transmission mécanique 38 pour déplacer le cadre 40 alternativement suivant la direction des flèches F40 et F41.

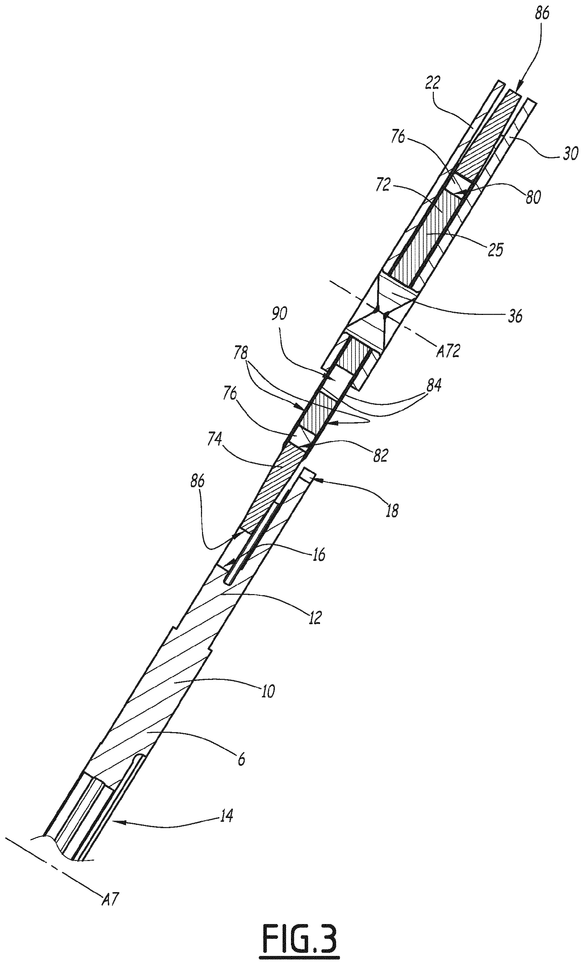

La figure 3 représente, en coupe, la came 6 et le galet 23, le galet 23 étant monté en chape entre l'une des extensions 30 et l'un des flasques 22 du levier 8 y étant solidarisé au moyen des organes de fixation 36.

Le roulement 25 du galet 23 comprend une bague intérieure 72, une bague extérieure 74 et des éléments roulants 76.

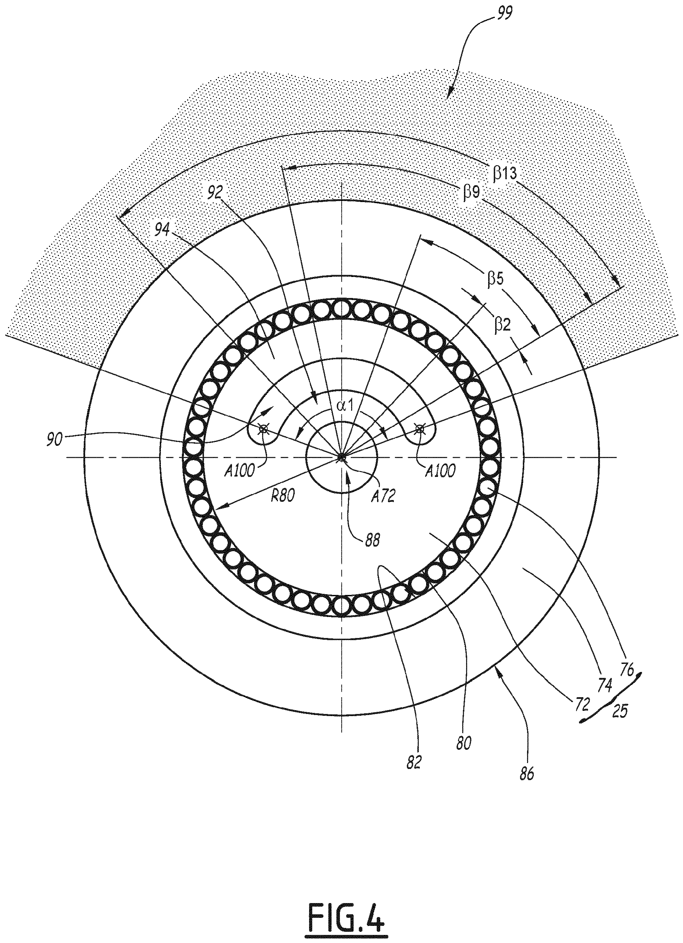

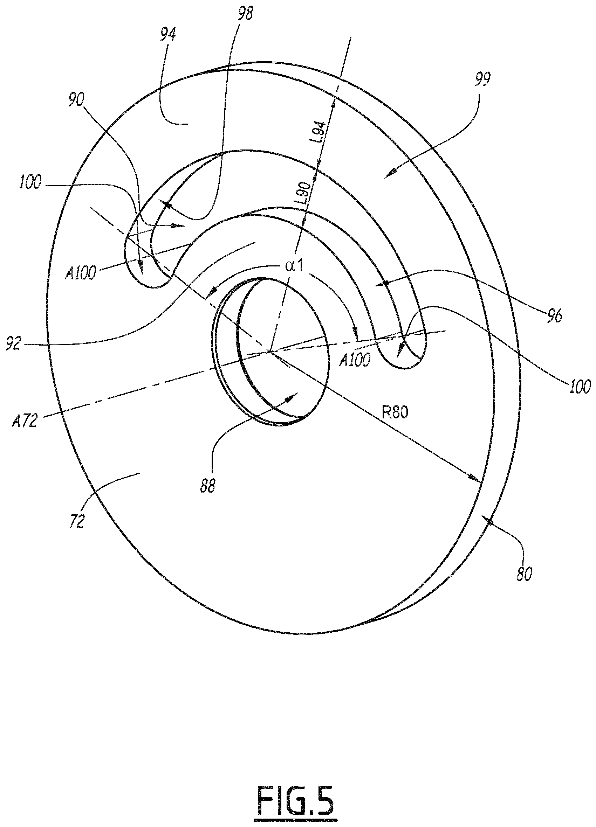

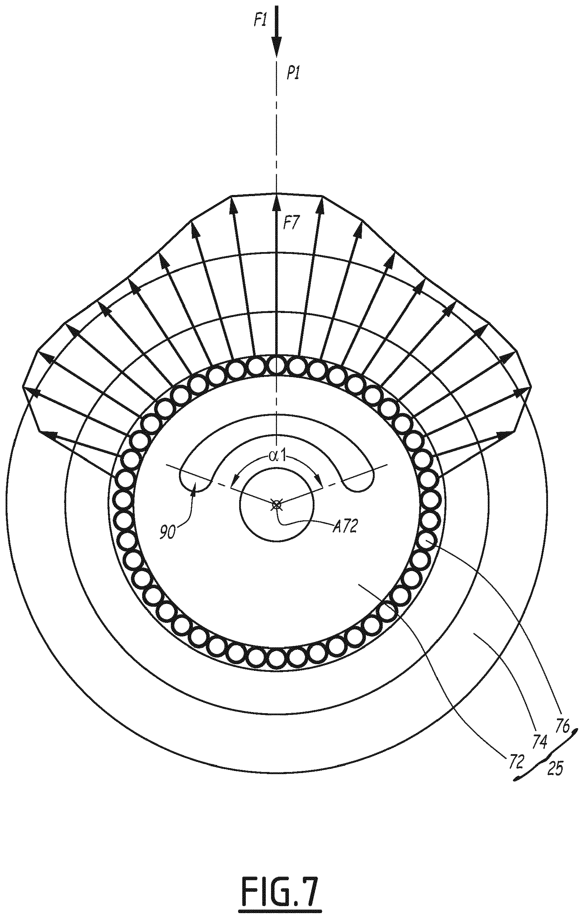

Le roulement 25 est aussi représenté sur les figures 4 et 7, tandis que la bague intérieure 72 est représentée seule et en perspective sur la figure 5.

La bague intérieure 72 est ménagée dans une plaque, de préférence métallique, et présente une forme externe circulaire centrée sur un axe principal A72. La bague 72 présente deux faces latérales 78, qui sont parallèles et radiales à l'axe principal A72, et définit un chemin de roulement périphérique 80, qui présente une forme de cylindre à base circulaire centrée sur l'axe principal A72 et avec un rayon R80.

La bague extérieure 74 est réalisée dans une plaque métallique et présente une forme d'anneau. Elle définit un chemin de roulement interne 82, qui présente une forme de cylindre à base circulaire centrée sur l'axe A72 et est située en regard du chemin périphérique 80 de la bague intérieure 72. Dans l'exemple illustré à la figure 3, la bague 74 présente une section radiale en forme de trapèze à chemins de roulement parallèles ou presque parallèles et avec des flans convergent dans une direction centrifuge par rapport à l'axe A72.

Le chemin de roulement interne 82 et le chemin de roulement périphérique 80 définissent entre eux un volume d'accueil des éléments roulants 76. Autrement dit les éléments roulants 76 sont interposés, radialement par rapport à l'axe principal A72, entre les chemins de roulement périphérique 80 et interne 82. Les éléments roulants 76 sont apte à guider en rotation la bague extérieure 74 par rapport à la bague intérieure 72 autour de l'axe principal A72.

Dans l'exemple illustré, les éléments roulants 76 sont des rouleaux cylindriques, dont les axes sont parallèles à l'axe principal A72.

En variante non représentée, les éléments roulants du jeu d'éléments roulants 76 peuvent être des billes ou des rouleaux coniques, ces exemples n'étant pas limitatifs.

Le roulement 25 comprend, en outre, deux flasques 84, situés de part et d'autre des faces latérales 78 du disque intérieur et qui se déploient chacun, radialement à l'axe A72, de manière à maintenir axialement par rapport à l'axe A72 les éléments roulants 76 au sein du volume délimité par les chemins de roulement périphérique 80 et interne 82. Les flasques 84 sont visibles sur la figure 3 et ont le rôle de guider et de contenir les éléments roulants 76 axialement dans le volume d'accueil formé entre les chemins de roulements 80 et 82 par coopération avec l'extrémité des éléments roulants 76, et ont également le rôle de définir un espace de décalage, entre les faces de la bague extérieure 74 du roulement 25 et les flasques 22 de levier 8, pour leur libre rotation autour de l'axe A72.

La couronne 74 présente, en outre, une piste externe 86 qui est une surface cylindrique de section circulaire centrée sur l'axe principal A72.

Le roulement 25 comprend aussi un trou 88 de fixation, qui est ménagé dans la bague intérieure 72 et qui coopère avec les organes de fixation 36 pour le montage du galet 23 sur le levier 8. Dans l'exemple illustré, le trou 88 est centré sur l'axe principal A72.

La bague intérieure 72 est ainsi fixée au levier de sortie 8, tandis que la bague extérieure 74 est mobile en rotation autour de l'axe principal A72 par rapport au levier de sortie 8.

On comprend que la bague extérieure 74, au contact de l'une des pistes 16 ou 18 de la came 6 par l'intermédiaire de la piste externe 86, « roule » sur la piste 16 ou 18 correspondante, ce qui réduit les frottements et l'usure des pièces. En ce sens la piste externe 86 est une de piste roulement périphérique de la bague extérieure 74.

En conséquence, les forces engendrées par le contact des pistes 16 ou 18 sur le galet 23 sont orientées radialement à l'axe principal A72 et ce, quelle que soit la position angulaire de la came 6 et quel que soit le lieu du contact entre la came 6 et la piste externe 86 de la bague extérieure 74.

La bague intérieure 72 comprend, en outre, une lumière 90. La lumière 90 est ménagée dans l'épaisseur de la bague intérieure 72 et débouche sur les deux surfaces latérales 78. La lumière 90 sépare, radialement à l'axe principal A72, un secteur central 92 de la bague intérieure 72 d'un pont de matière 94, le pont de matière 94 formant une portion du chemin de roulement périphérique 80. Autrement dit, la lumière 90 s'étend en regard d'une portion du chemin de roulement 80. Par « en regard », on entend que la lumière 90 s'étend à proximité du chemin de roulement périphérique 80 de façon similaire, ou bien la lumière 90 s'étend selon le chemin de roulement 80 ou encore une portion du profil de la lumière 90 s'approche d'une portion du profil du chemin de roulement 80.

La lumière 90 présente un bord interne 96 et un bord externe 98, les bords interne et externe 96 et 98 étant reliés entre eux par deux raccords 100, qui constituent des extrémités arrondies de la lumière 90.

Dans l'exemple illustré, les bords interne et externe 96 et 98 sont des portions de cylindres centrés sur l'axe principal A72, tandis que les raccords 100 sont aussi des portions de cylindre de section circulaire, chacun centré sur un axe respectif A100, les axes A100 étant parallèles à l'axe principal A72. En particulier, l'écartement entre les bords interne 96 et externe 98 est constant.

Les bords interne et externe 96 et 98 définissent entre eux une largeur radiale L90 de la lumière 90, mesurée radialement à l'axe A72. De façon analogue, on définit une largeur radiale L94 du pont de matière 94 comme étant une largeur, mesurée radialement à l'axe principal A72, entre le bord externe 98 de la lumière 90 et la piste externe 86 de la bague extérieure 74.

On définit un secteur angulaire 99 comme un dièdre centré sur l'axe A72 et dont les côtés passent par les axes A100 des raccords 100. Le secteur angulaire 99 est représenté en grisé sur la figure 4. On note α1 l'angle porté par l'axe principal A72 reliant les axes A100 des deux raccords 100. L'angle au sommet α1 du secteur angulaire 99 de la bague intérieure 72 représente ainsi conjointement l'étendue angulaire de la lumière 90 et l'étendue angulaire du pont de matière 94.

On définit un plan P1 comme étant un plan passant par l'axe A7 de la came 6 et par l'axe A72 du roulement 25. On définit aussi un angle de charge β comme étant la mesure d'un angle, porté par l'axe principal A72 du roulement 25, entre le plan P1 et le lieu du contact entre la bague extérieure 74 du roulement 25 et la came 6. Sur la figure 1, l'angle de charge β est non nul. Sur la figure 2, la came 6 est dans une autre position que sur la figure 1, dans laquelle l'angle de charge β est nul.

Plus généralement, on comprend qu'au cours d'un cycle de formation de la foule, l'intensité et le lieu d'application de la force de contact entre le galet 23 et la came 6 évoluent cycliquement.

Ce lieu du contact bouge alternativement de part et d'autre du plan P1 et l'angle de charge β prend alternativement des valeurs positives ou négatives entre deux valeurs extrêmes, définissant une zone de charge radiale du roulement 25. La force appliquée par la came 6 sur le galet 46 a ainsi une direction et une intensité cycliquement variables. En particulier, la force subie par les éléments roulants 76 présente une valeur maximale au cours d'un cycle de formation de la foule.

Dans l'exemple illustré, le plan P1 est un plan de symétrie de la bague intérieure 72 du roulement 25, autrement dit le plan P1 est un plan de symétrie de la lumière 90 du roulement 25.

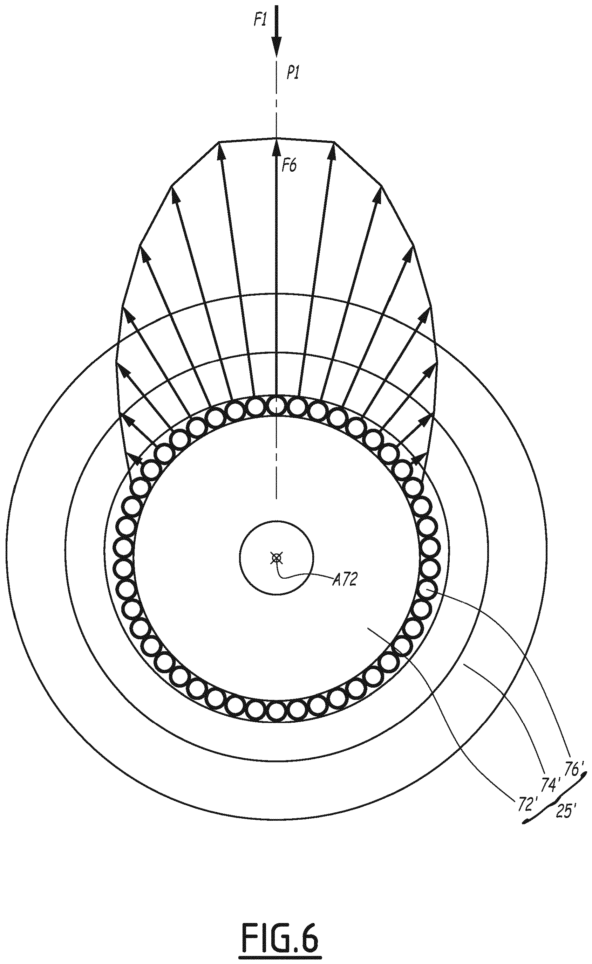

La figure 6 représente le résultat d'une simulation numérique du comportement d'un roulement 25' conforme à l'état de la technique et comprenant une bague intérieure 72', une bague extérieur 74' et des éléments roulants 76'. Le roulement 25' conforme à l'état de la technique présente une structure analogue à celle du roulement 25 conforme au premier mode de réalisation de l'invention, une des différences étant que le roulement 25' ne comprend pas de lumière, du type de la lumière 90, ni de pont de matière, du type du pont de matière 94. La figure 7 représente les résultats de simulation numérique du comportement du roulement 25 des figures 3 à 5 et 7, conforme à un premier mode de réalisation de l'invention.

Sur les figures 6 et 7, le roulement 25 ou 25' est soumis à une force de mêmes intensité et direction, représentée par une flèche F1 orientée vers l'axe principal A72 du roulement. Cette force est issue du couple moteur de l'arbre à cames à l'encontre des forces du cadre 40 et des éléments de tirage qui agissent en mouvement et pèsent sur le roulement 25 ou 25' concerné. La déformation des pièces sous l'effet de la force F1 est représentée de façon exagérée sur chacune des figures 6 et 7 pour illustrer l'effet de l'invention à la figure 7. La direction et l'intensité de la force résultante des forces de contact au niveau de chaque élément roulant 76 sont représentés par une flèche, dont la direction est celle de la force résultante des forces de contact des éléments roulants et dont la longueur est proportionnelle à l'intensité de ladite force résultante.

Sur la figure 6, la bague extérieure 74' est ovalisée suivant une direction orthogonale à la direction de la flèche F1, tandis que la bague intérieure 72' ne présente pas de déformation. En outre, seuls quinze éléments roulants 76' sont en contact avec la bague extérieure 74'. On nomme F6 la plus longue flèche représentant, sur la figure 6, l'effort maximal de contact du roulement 25 sous la charge.

Sur la figure 7, la bague extérieure 74 présente une déformation analogue à la bague extérieure 74' du galet selon l'état de la technique, mais la bague intérieure 72 est, quant à elle, déformée de façon élastique sous l'action de la force F1. D'autre part dix-neuf éléments roulants 76 subissent une force. La déformation élastique de la bague intérieure 72, représentée de façon exagérée par un écrasement de la lumière 90, permet à un plus grand nombre d'éléments roulants 76 de générer une force résultante à l'encontre de l'application de la force F1. On nomme F7 la flèche représentant l'effort maximal de contact du roulement sous la charge sur la figure 7.

Dans l'exemple illustré, la flèche F7 présente une longueur plus courte de moitié que la flèche F6. Autrement dit, l'effort maximal subit par les éléments roulants 76 du roulement 25 selon l'invention est environ inférieur de moitié à l'effort maximal subit par les éléments roulants 76' du roulement 25' selon l'état de la technique, ce qui est particulièrement avantageux pour réduire la fatigue des matériaux.

Ainsi que décrit précédemment, l'angle de charge β varie continûment entre deux valeurs extrêmes au cours du fonctionnement de part et d'autres du plan P1. Le secteur angulaire 99 de la lumière 90 doit ainsi être suffisamment étendu, donc l'angle au sommet α1 suffisamment grand, pour que la déformation élastique de la bague intérieure 72 soit suffisante, quelle que soit la valeur de l'angle de charge β.

Selon des exemples, la zone de charge est alignée avec le secteur angulaire 99 de la lumière 90. Selon d'autres exemples, la lumière 90 s'étend de chaque côté d'une ligne médiane dirigée selon l'intensité maximale de la force de contact entre le roulement 25et la came 6. Selon d'autres exemples, la lumière est symétrisée par rapport à un plan médian, qui lui-même symétrise l'étendue de la zone de roulement entre la came 12 et le galet 23, 24 sur un cycle de foule complet.

En pratique, la lumière 90 s'étend sur un secteur angulaire 99 de la bague intérieure 72 dont l'angle au sommet α1 est supérieur à 20°. De préférence, l'angle au sommet α1 est supérieur à 70°, de préférence encore, supérieur à 120°. À l'inverse, on comprend qu'un angle au sommet α1 trop grand risque de fragiliser la bague intérieure 72 sur l'étendue du pont de matière 94 correspondant, ce qui est l'inverse de l'effet recherché. En pratique, notamment si le pont de matière 94 est limité en épaisseur, la valeur de l'angle au sommet α1 est inférieure à 160°.

La force à laquelle le galet d'entraînement 23 est soumis étant répartie sur les éléments roulants 76, l'angle au sommet α1 du secteur angulaire 99 peut aussi être exprimé en fonction du nombre d'éléments roulants 76 sur lequel la charge est répartie.

Sur la figure 4, on définit β2 comme étant un angle au sommet d'un secteur angulaire de la bague intérieure 72 correspondant au secteur angulaire occupé par deux éléments roulants 76 consécutifs. De façon analogue, on définit des angles au sommet β5, β9 et β13 comme étant des secteurs angulaires de la bague 72 correspondant au secteur angulaire occupé par respectivement cinq, neuf et treize éléments roulants 76 consécutifs.

Ainsi, la lumière 90 s'étend sur un secteur angulaire 99 dont l'angle au sommet α1 est supérieur ou égal à l'angle au sommet β2. De préférence, l'angle au sommet α1 est supérieur ou égal à l'angle au sommet β5. De préférence encore, l'angle au sommet α1 est supérieur ou égal à l'angle au sommet β9. De façon encore plus préférentielle, l'angle au sommet α1 est supérieur ou égal à l'angle au sommet β13.

Lorsque le roulement 25 est soumis à une force de contact, la largeur radiale L90 de la lumière 90 doit être suffisamment grande pour éviter que le bord interne 96 et le bord externe 98 n'entrent en contact l'un avec l'autre sous l'effet de la charge appliquée au galet 23.

La lumière doit ainsi présenter une largeur L90 supérieure ou égale à 5% du rayon R80 du chemin périphérique 80. De préférence, la largeur L90 est supérieure à 10% du rayon R80. De préférence encore, la largeur L90 est supérieure à 20% du rayon R80.

Sous l'effet de la charge, le pont de matière 94 se déforme élastiquement. À l'inverse, un pont de matière 94 présentant un largeur radiale L94 trop importante serait trop rigide et ne se déformerait pas sous la charge. Ainsi, le pont de matière 94 présente une largeur radiale L94 inférieure à 30% du rayon R80 du chemin de roulement 80 de la bague intérieure 72, de préférence inférieure à 20%, de préférence encore inférieure à 10%.

À l'inverse, on comprend que si la largeur radiale L94 du pont de matière 94 est trop petite, le pont de matière 94 risque d'être fragilisé, voire de se déformer plastiquement, ce qui n'est pas désirable. C'est pourquoi, en pratique, la largeur L94 est supérieure à 20% du rayon R80. L'homme du métier sait bien entendu déterminer les limites acceptables de la largeur radiale L94 en fonction notamment de la géométrie de la lumière 90, du cycle de charge subie par le roulement 25 et du matériau de la bague intérieure 72.

Dans l'exemple illustré, la largeur radiale L94 du pont de matière 94 est sensiblement égale à la largeur radiale L90 de la lumière 90. Par « sensiblement égale » on entend que les largeur radiale L90 et L94 sont égales l'une à l'autre à 50% près, de préférence à 20% près.

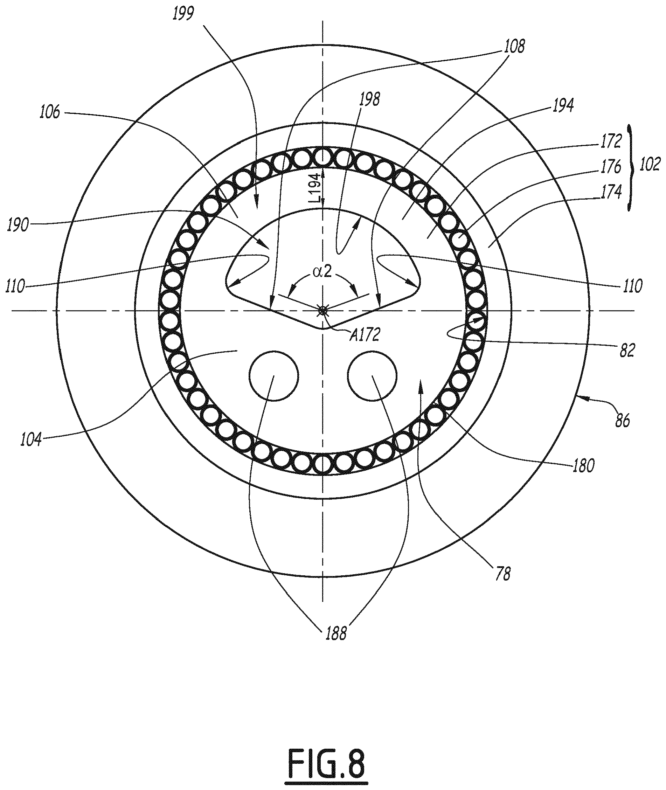

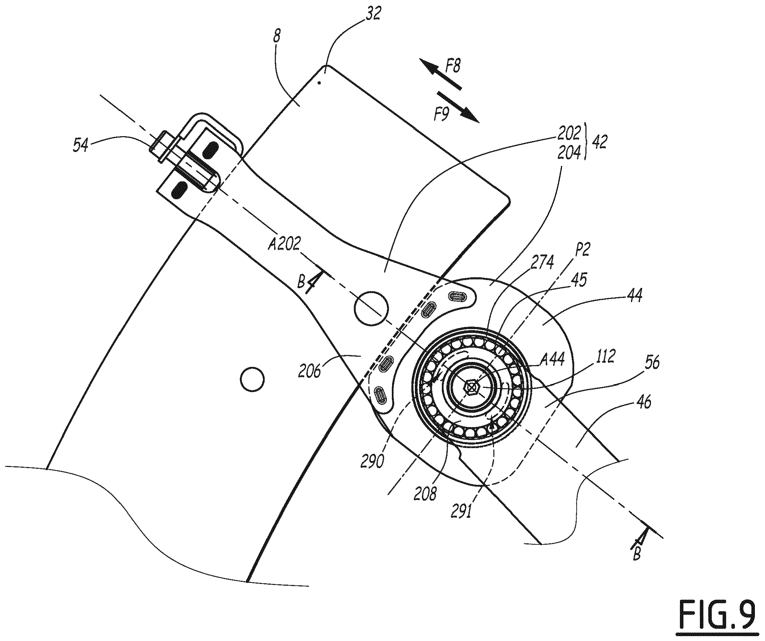

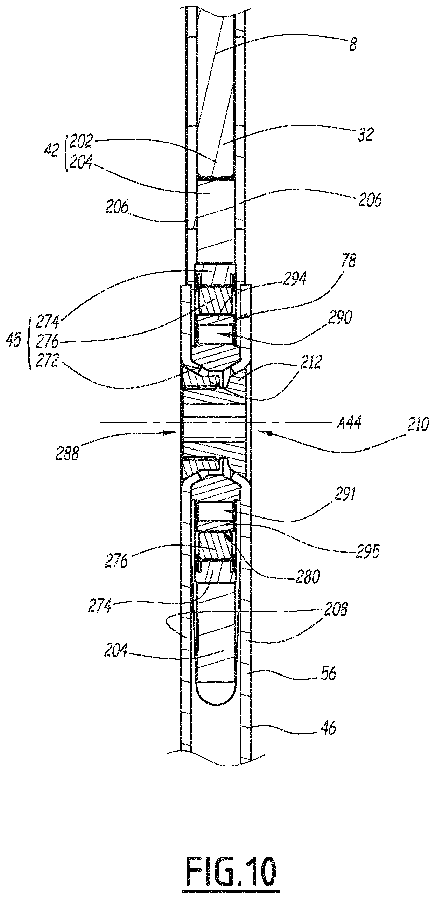

Dans les deuxième et troisième modes de réalisation du roulement selon l'invention, représentés respectivement sur la figures 8 et sur les figures 9 à 11, les éléments analogues à ceux du premier mode de réalisation portent les mêmes références et fonctionnent de la même façon. Dans ce qui suit, on décrit principalement les différences entre les deuxième et troisième modes et le premier mode de réalisation.

Un roulement 102, conforme au deuxième mode de l'invention, est représenté en figure 8.

Le roulement 102 comprend une bague intérieure 172, qui a une forme de disque centré sur un axe A172, présente deux surfaces latérales 78 et définit un chemin de roulement périphérique 180. La bague intérieure 172 est mobile en rotation par rapport à la couronne 174 autour de l'axe A172, au moyen des éléments roulants 176 interposés entre le chemin de roulement périphérique 180 et le chemin de roulement interne 82 de la bague extérieure 174.

La bague inférieure 172 comprend un premier demi-disque 104 et un deuxième demi-disque 106 complémentaire du demi-disque 104.

Deux trous 188 de fixation sont ménagés au travers du demi-disque 104. Dans l'exemple illustré, les deux trous 188 sont ménagés dans une portion intermédiaire entre l'axe A172 et le chemin périphérique 180 et sont disposés symétriquement de part et d'autre d'un plan de symétrie du premier demi-disque 104 représenté par un trait vertical à la figure 8. Avantageusement la fixation de la bague intérieure selon ce mode de réalisation sur le levier de sortie permet le rapprochement des axes de fixation A36 par rapport à l'axe A9 du levier 8, ce qui permet de diminuer les dimensions des leviers 8 et, plus généralement, de gagner en volume de construction de la machine, ce qui bénéficie au poids et aux contraintes mécaniques de ses composants.

Une lumière 190 est ménagée dans la bague intérieure 172, débouchant sur ses deux surfaces latérales 78. Dans l'exemple illustré sur la figure 8, la lumière 190 est ménagée essentiellement dans le deuxième demi-disque 106.

La lumière 190 présente une forme de portion de disque, avec un bord externe 198 en forme d'arc de cercle et un bord interne 196 qui est formé de deux faces planes 108. Les faces 108 sont reliées entre elles par un raccord cylindrique centré sur l'axe A172 opposé au bord externe 198 par rapport à l'axe A172. Le bord externe 198 est relié à chacune des faces planes 108 par un raccord 110 respectif. Les raccords 110 sont des portions de cylindre centré sur un axe respectif parallèle à l'axe principal A172. La lumière 190 s'étend sur un secteur angulaire 199, centré sur l'axe principal A172, et dont on note α2 l'angle au sommet, mesuré autour de l'axe A172, entre les axes des raccords 110.

Dans l'exemple illustré, l'angle au sommet α2 du secteur angulaire 199 est sensiblement égal à 120° et est équivalent à l'angle au sommet d'un secteur angulaire occupé par dix-huit éléments roulants 176. Il est donc supérieur à des angles définis comme les angles β2, β5, β9 et β13 pour le premier mode de réalisation.

La lumière 190 s'étend sous une portion du chemin de roulement périphérique 180 et forme un pont de matière 194 entre la surface externe 198 et le chemin de roulement périphérique 180. Dans l'exemple illustré, le pont de matière 194 s'étend selon un arc de cercle centré sur l'axe principal A172 et présente une largeur radiale L194 constante.

Plus généralement, on comprend que la géométrie et la localisation de la lumière 190, ainsi que le nombre et la localisation des trous de fixation 180, sont déterminés lors de la conception du roulement 102 de manière à assurer une fixation solide du roulement 102 par le positionnement et le dimensionnement des éléments de fixation sur la bague intérieure 172, et une bonne répartition des charges subies par les éléments roulants 176 grâce à la déformation élastique de la bague intérieure 172.

Le roulement 45 du troisième mode de réalisation comprend une bague intérieure 272, centrée sur l'axe A44 du galet 44. L'axe A44 est aussi l'axe principal de la bague intérieure 272. La bague intérieure 272 définit un chemin de roulement périphérique 280 et est mobile en rotation par rapport à la couronne 274 autour de l'axe A44, au moyen des éléments roulants 276 interposés entre le chemin de roulement périphérique 280 et un chemin de roulement interne 282 de la bague extérieure 74.

L'agrafe réglable 42 comprend un étrier 202 et une tête 204. L'étrier 202, comprend deux pattes 206, qui sont allongées et s'étendent dans leur longueur parallèlement à un axe A202 de l'étrier 202. Les pattes 206 sont situées de part et d'autre du bras 32 du levier de sortie 8 et sont chacune reliées à la tête 204. Dans l'exemple illustré, la tête 204 est soudée aux pattes 206. Grâce à l'organe de réglage 54, la position de l'agrafe 42 le long du bras 32 du levier 8 est réglable par un opérateur, tandis que pendant le fonctionnement normal de la machine à cames 2, la tête 204 est solidaire avec le levier de sortie 8, c'est-à-dire en contact continu sans jeu et sans possibilité de mouvement relatif entre ces pièces.

La tête 204 présente un orifice central dans lequel est logé le roulement 45. Plus précisément, la bague extérieure 274 du roulement 45 est reçue sans jeu dans l'orifice central de la tête 204 de l'agrafe 42. De façon non limitative, l'assemblage du roulement 45 à l'agrafe 42 est réalisé par exemple par frettage ou par soudage.

La bielle d'attaque 46 comprend, dans le prolongement de la première extrémité 56, deux brides 208 de fixation. Les brides 208 présentent chacune un orifice 210, les orifices 210 étant situés en regard l'un de l'autre, les parois des brides 208 convergeant l'une vers l'autre au voisinage des orifices 210. Les brides 208 coopèrent avec un trou 288 de fixation de la bague intérieure 272, les orifices 210 accueillant des organes de fixation 212 aptes à solidariser l'assemblage des brides 208 à la bague intérieure 272. Dans l'exemple illustré, les organes de fixation 212 sont un couple vis-écrou.

La bielle d'attaque 46 est ainsi solidaire de la bague intérieure 272, tandis que la couronne 74 est solidaire du levier de sortie 8 par l'intermédiaire de la tête 204 de l'agrafe 42.

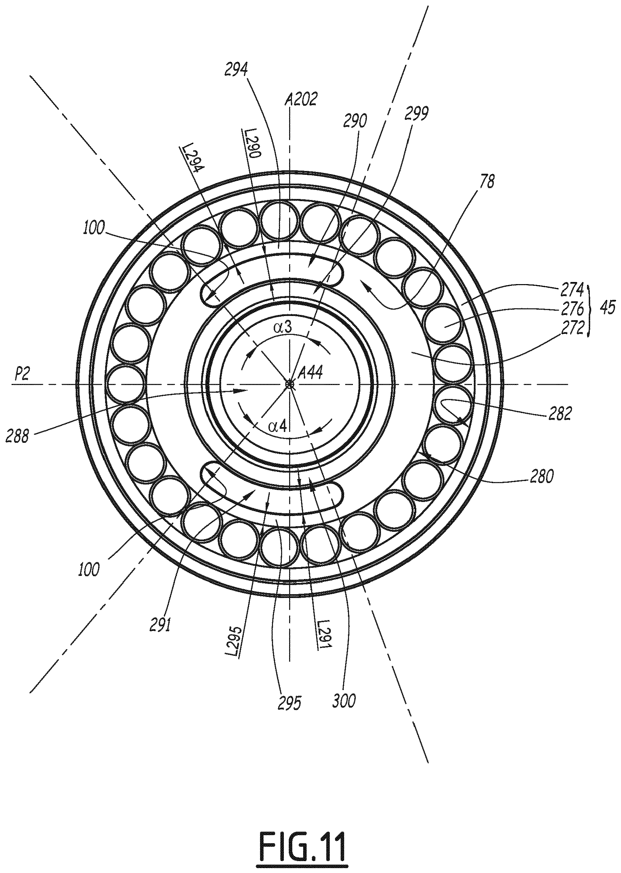

La bague intérieure 272 comprend deux lumières 290 et 291, visibles notamment sur la figure 11. Chacune des lumières 290 et 291 est ici analogue à la lumière 90 du roulement 25 du premier mode de réalisation. Les deux lumières 290 et 291 débouchent sur les deux surfaces latérales 78 de la bague intérieure 272 et sont ici diamétralement l'opposée par rapport à l'axe central A44. Plus précisément, les lumières 290 et 291 sont disposées symétriquement de part et d'autre d'un plan transversal P2, ce plan P2 étant orthogonal à l'axe A202 de l'étrier 202 et contenant l'axe A44 du galet 44. Sur les figures, la lumière 290 est plus proche du levier 8 que la lumière 291.

La lumière 290 définit un secteur angulaire 299, avec un angle au sommet α3, et la lumière 291 définit un secteur angulaire 300, avec un angle au sommet α4. Dans l'exemple illustré, les secteurs angulaires 299 et 300 couvrent chacun un secteur angulaire occupé par quatre éléments roulants 276 et leurs angles au sommet respectifs α3 et α4 sont sensiblement égaux à 70°. Les angles α3 et α4 sont donc supérieurs à un angle défini comme l'angle β2 pour le premier mode de réalisation.

Dans l'exemple illustré, les lumières 290 et 291 présente la même forme et les secteurs angulaires α3 et α4 sont égaux entre eux.

Au cours d'un cycle de formation de la foule, lorsque le levier de sortie 8 se déplace dans la direction de la flèche F9, la bielle d'attaque 46 est repoussée par le levier 8 et la bague intérieure 272 est en compression du côté de la lumière 290. De façon analogue, lorsque le levier de sortie 8 se déplace dans la direction de la flèche F8, la bielle d'attaque 46 est tirée par le levier 8 et la bague intérieure 272 est en compression du côté de la lumière 291. On comprend que dans le troisième mode de réalisation, le roulement 45 et notamment le pont de matière 294 ou 295 associé à chacune des lumières 290 ou 291 de la bague intérieure 272, sont sollicités alternativement en compression d'un côté ou de l'autre du plan P2.

Chacune des lumières 290 ou 291 permet la répartition des efforts sur les éléments roulants 276 lors des cycles répétés de compression ou de traction de la bielle d'attaque 46.

Plus généralement, comme la bague intérieure 272 est soumise à des efforts de compression cycliques principalement orientés suivant deux directions différentes définissant deux zones de charge distinctes, les lumières 290 et 291 sont disposées autour de l'axe A44 de façon alignée avec une zone de charge respective, de manière à favoriser la répartition des efforts sur les éléments roulants du jeu d'éléments roulants 76 dans la direction desdits efforts.

Selon une variante non représentée de l'invention, les lumières 290 et 291 s'étendent chacune de part et d'autre d'une ligne médiane dirigée selon l'intensité maximale de la force radiale exercée par le système de transmission 38 sur le roulement 45.

Selon une autre variante non représentée, la lumière est symétrisée par rapport à un plan médian, qui lui-même symétrise l'étendue de la zone de charge radiale exercée par le levier 8 sur la bague intérieure 272.

En variante non représentée, la bague intérieure 272 peut comporter plus de deux lumières du type des lumières 290 et 291, pour répartir les efforts subis par les éléments roulants du jeu d'éléments roulants 276.

Plus généralement, dans l'exemple illustré, les roulements 25 comprennent une seule lumière 90 et un trou 88 de fixation. En variante non représentée, les roulements du type des roulements 25 peuvent comprendre deux trous de fixation analogue aux trous du roulement 102, ou bien disposés différemment. Selon une autre variante, les roulements du type des roulements 25 peuvent comprendre deux lumières ou plus, analogues aux lumières 290 ou 291 du troisième mode de réalisation.

De façon analogue, en variante non représentée le roulement 102 du galet 44 peut ne comprendre qu'une seule lumière, du type des lumières 94 ou 194.

Dans tous les modes de réalisation, l'angle au sommet α1, α2, α3 ou α4 du secteur angulaire 99, 199, 299 ou 300 et la largeur radiale L90 d'une lumière du type de la lumière 90 peuvent être définis lors de la conception de la bague intérieure 72, 172 ou 272 en fonction de l'angle de charge β et de l'intensité des efforts auxquels le roulement 25, 102 ou 45 est soumis durant le cycle de foule. De façon analogue, la largeur radiale L94 du pont de matière 94 ou équivalent délimité par la lumière 90 ou équivalent peut être ajustée lors de la conception et de la fabrication, en fonction du type d'effort et de la répartition des efforts prévus pendant l'utilisation.

Les lumières du type des lumière 90 ou 290 et 291 s'étendent selon un arc de cercle centré sur l'axe principal du disque intérieur, à l'image de la lumière 90 centrée sur l'axe A72 de la bague intérieure 72. En variante non représentée, les lumières peuvent s'étendre selon un arc de cercle centré sur un axe décalé par rapport à l'axe A72. Selon une autre variante encore les lumières ne présentent pas une courbure constante mais peuvent présenter une courbure qui varie de façon continue.

Selon une autre variante non représentée, le trou 88 ménagé dans la bague intérieure est remplacé par un ou plusieurs évidements, qui débouchent sur une seule face de la bague intérieure du roulement et qui sont aptes à coopérer avec le levier 8 pour leur assemblage.

Selon une autre variante non représentée, la largeur L94 du pont de matière 94 formé par la lumière 90 avec le chemin périphérique 80, mesurée radialement à l'axe A72 entre les bords externe 98 et le chemin 80, n'est pas constante, mais varie de façon continue, pour s'adapter par exemple à une force, à laquelle le galet est soumis, qui varie en fonction de l'angle de charge β. Ainsi certains secteurs du pont de matière peuvent être rigidifiés par augmentation de l'épaisseur radiale L94 et d'autres secteurs assouplis par une réduction d'épaisseur radiale L94, en fonction des sollicitations locales imposées par le cycle de la machine 2.

Dans l'exemple illustré sur les figures 1 à 5, la machine de formation de la foule 2 comprend une machine à cames, avec des galets 23 et 24 comprenant chacun un roulement 25 conforme au premier mode de réalisation de l'invention.

Plus généralement, les galets de cette machine à cames peuvent comprendre des roulements, du type des roulements 25, 102 ou 45, ce qui permet de réduire le risque de défaillance des roulements et d'augmenter la productivité de la machine à cames, par exemple en allongeant l'intervalle entre les maintenances et/ou en augmentant les vitesses de la machine de formation de la foule 2 et/ou en modifiant les profils de cames 6 pour imposer des accélération plus sévères.

Selon une variante non représentée de l'invention, la machine de formation de la foule est de type ratière et comprend un système de transmission de mouvement mécanique analogue au système de transmission 38, qui comprend un roulement du type du roulement 45. Par exemple, l'axe A62 ou l'axe A64 peuvent définir une articulation avec un roulement du type de la présente invention.

Les modes de réalisation et les variantes mentionnés ci-dessus peuvent être combinés entre eux pour générer de nouveaux modes de réalisation de l'invention dans le cadre des revendications ci-jointes.

## Revendications

1. Roulement (25 ; 102 ; 45) destiné à une machine de formation de la foule ou à un système de transmission de mouvement aux cadres d'un métier à tisser, comprenant une bague intérieure (72 ; 172 ; 272), une bague extérieure (74 ; 174 ; 274) et des éléments roulants (76 ; 176 ; 276), dans lequel :
- la bague intérieure est centrée sur un axe principal (A72 ; A172 ; A44), comprend deux surfaces latérales (78) normales à l'axe principal et définit un chemin de roulement périphérique (80 ; 180 ; 280) circulaire centré sur l'axe principal,
- la bague extérieure (74 ; 174 ; 274) définit un chemin de roulement interne (82), qui est circulaire et centré sur l'axe principal,
- les éléments roulants (76; 176; 276) sont interposés, radialement par rapport à l'axe principal, entre le chemin de roulement périphérique et le chemin de roulement interne, de manière à guider en rotation la bague extérieure par rapport à la bague intérieure autour de l'axe principal,
**caractérisé**
- **en ce que** la bague intérieure (72 ; 172 ; 272) comprend au moins une lumière (90 ; 190 ; 290, 291), débouchant sur les deux surfaces latérales (78), s'étendant en regard d'une portion du chemin de roulement périphérique (80 ; 180 ; 280), et forme un pont de matière (94 ; 194 ; 294, 295) entre la lumière et le chemin de roulement périphérique,
- **en ce que** le pont de matière (94 ; 194 ; 294, 295) s'étend sur un secteur angulaire (99 ; 199 ; 299, 300) de la bague intérieure, le secteur angulaire étant centré sur l'axe principal (A72 ; A172; A44) du roulement et présentant un angle au sommet (α1 ; α2 ; α3, α4) supérieur ou égal à l'angle au sommet (β2) d'un secteur angulaire occupé par deux éléments roulants (76 ; 176 ; 276), de préférence supérieur ou égal à l'angle au sommet (β5) d'un secteur angulaire occupé par cinq éléments roulants, de préférence supérieur ou égal à l'angle au sommet (β9) d'un secteur angulaire occupé par neuf éléments roulants, de préférence encore supérieur ou égal à l'angle au sommet (β13) d'un secteur angulaire occupé par treize éléments roulants,
- et **en ce que** la bague intérieure (72 ; 172 ; 272) comprend en outre au moins un trou (88 ; 188 ; 288) de fixation du roulement (25 ; 102 ; 45).

2. Roulement (25 ; 102 ; 45) selon la revendication précédente, **caractérisé en ce que** l'angle au sommet (α1 ; α2 ; α3, α4) du secteur angulaire (99 ; 199 ; 299, 300) de la bague intérieure (72 ; 172 ; 272) est supérieur à 20°, de préférence supérieur à 70°, de préférence encore supérieur à 120°.

3. Roulement (25; 102; 45) selon l'une quelconque des revendications précédentes, **caractérisé en ce que** le pont de matière (94 ; 194 ; 294, 295) s'étend avec une largeur radiale (L94 ; L194 ; L294, L295) constante et selon un arc de cercle centré sur l'axe principal (A72 ; A172 ; A44) de la bague intérieure (72 ; 172 ; 272).

4. Roulement (25) selon la revendication précédente, **caractérisé en ce que** la largeur radiale (L94) est sensiblement égale à une largeur radiale (L90) de la lumière (90).

5. Roulement (25) selon la revendication précédente, **caractérisé en ce que** la largeur radiale (L94) du pont de matière (94) est inférieure à 30%, de préférence inférieure à 20%, de préférence encore inférieure à 10% d'un rayon (R80) du chemin de roulement périphérique (80) de la bague intérieure (72).

6. Roulement (25 ; 45) selon l'une quelconque des revendications précédentes, **caractérisé en ce que** la lumière (90 ; 290, 292) s'étend entre deux extrémités (100) arrondies de diamètre égal à la largeur (L90 ; L290, L291) de la lumière.

7. Roulement (24; 102; 45) selon l'une quelconque des revendications précédentes, **caractérisé en ce que** les éléments roulants (76 ; 176 ; 276) sont des rouleaux.

8. Roulement (25 ; 102 ; 45) selon l'une quelconque des revendications 1 à 6, **caractérisé en ce que** les éléments roulants (76 ; 176 ; 276) sont des billes.

9. Roulement (45) selon l'une quelconque des revendications précédentes, **caractérisé en ce que** plusieurs lumières (290, 291) sont ménagées dans la bague intérieure (272).

10. Roulement (45) selon la revendication précédente, caractérisé en ce la bague comprend deux lumières (290, 291) diamétralement opposées par rapport à l'axe central (A44).

11. Roulement (102) selon l'une quelconque des revendications1 à 8, **caractérisé en ce que** la bague intérieure (172) comprend une lumière (190) et deux trous (188) de fixations.

12. Levier de sortie (8) à galets suiveurs de mécanique d'armure à cames, le levier étant équipé de deux galets (23, 24), **caractérisé en ce qu'**au moins un des galets comporte un roulement (25 ; 102) selon l'une quelconque des revendications précédentes, la bague intérieure (72 ; 172) du roulement étant fixée sur une âme (20) du levier ou/et sur un flasque (22) rapporté sur le levier au moyen d'organes de fixation (36), la bague extérieure (74; 174) présentant une piste de roulement périphérique (86) à profil circulaire.

13. Machine de formation de la foule (2) de type machine à cames, **caractérisée en ce qu'**elle comprend un levier de sortie (8) selon la revendication 12.

14. Machine de formation de la foule (2) selon la revendication précédente, **caractérisée en ce que** le levier de sortie (8) oscille autour d'un axe principal (A9) de la machine à cames entre une position haute et une position basse en fonction d'un profil (16, 18) de came (6) agissant par contact sur la piste de roulement périphérique (86) d'un des galets (23, 24), le contact étant réalisé dans une zone de charge radiale alignée avec le secteur angulaire (99, 199) de la bague intérieure (72 ; 172) dans lequel est ménagée la lumière (90 ; 190).

15. Machine de formation de la foule (2) de type machine à cames ou de type ratière, comprenant un système de transmission mécanique (38) au métier à tisser conçu autour d'articulations d'axes (A62, A64, A70) parallèles entre eux, **caractérisé en ce que** l'une des articulations comprend un roulement (45) selon l'une des revendications 1 à 11.

16. Machine de formation de la foule (2) selon l'une quelconque des revendications 14 ou 15, **caractérisée en ce que** le pont de matière (94 ; 194 ; 294, 295) s'étend de chaque côté d'une ligne médiane dirigée selon l'intensité maximale de la force de contact entre le galet (23, 24) et la came (6), ou dirigée selon l'effort radial maximal sur une des articulations du système de transmission (38) qui comprend un roulement (45), l'effort radial maximal correspondant à la charge radiale, appliquée sur les éléments roulants (76 ; 176 ; 276), la plus élevée au cours d'un cycle de formation de foule.

## Patentansprüche

1. Wälzlager (25; 102; 45), das für eine Fachbildemaschine oder für ein Bewegungsübertragungssystem auf die Rahmen einer Webmaschine bestimmt ist, umfassend einen Innenring (72; 172; 272), einen Außenring (74; 174; 274) und Wälzkörper (76; 176; 276), wobei:
- der Innenring auf einer Hauptachse (A72; A172; A44) zentriert ist, zwei Seitenflächen (78) senkrecht zu der Hauptachse umfasst und eine kreisförmige Umfangslaufbahn (80; 180; 280) definiert, die auf der Hauptachse zentriert ist,
- der Außenring (74; 174; 274) eine innere Laufbahn (82) definiert, die kreisförmig und auf der Hauptachse zentriert ist,
- die Wälzkörper (76; 176; 276) radial in Bezug auf die Hauptachse zwischen der Umfangslaufbahn und der Innenlaufbahn eingefügt sind, um den Außenring in Bezug auf den Innenring um die Hauptachse drehbar zu führen,
**gekennzeichnet**
- **dadurch, dass** der Innenring (72; 172; 272) mindestens eine Öffnung (90; 190; 290, 291) umfasst, das an den zwei Seitenflächen (78) mündet, sich gegenüber einem Abschnitt der Umfangslaufbahn (80; 180; 280) erstreckt und eine Materialbrücke (94; 194; 294, 295) zwischen den Öffnungen und der Umfangslaufbahn bildet,
- dadurch, dass sich die Materialbrücke (94; 194; 294, 295) über einen Winkelsektor (99; 199; 299, 300) des Innenrings erstreckt, wobei der Winkelsektor auf die Hauptachse (A72; A172; A44) des Lagers zentriert ist und einen Scheitelwinkel (α1; α2; α3, α4) größer als oder gleich wie der Scheitelwinkel (β2) eines Winkelsektors ist, der von zwei Wälzkörpern (76; 176; 276) eingenommen wird, vorzugsweise größer als oder gleich wie der Scheitelwinkel (β5) eines von fünf Wälzkörpern besetzten Winkelsektors, vorzugsweise größer als oder gleich wie der Scheitelwinkel (β9) eines von neun Wälzkörpern besetzten Winkelsektors, bevorzugter größer als oder gleich wie der Scheitelwinkel (β13) eines von dreizehn Wälzkörpern besetzten Winkelsektors, aufweist,
- und dadurch, dass der Innenring (72; 172; 272) ferner mindestens ein Loch (88; 188; 288) zur Befestigung des Lagers (25; 102; 45) umfasst.

2. Wälzlager (25; 102; 45) nach dem vorherigen Anspruch, **dadurch gekennzeichnet, dass** der Scheitelwinkel (α1; α2; α3, α4) des Winkelsektors (99; 199; 299, 300) des Innenrings (72; 172; 272) größer als 20°, vorzugsweise größer als 70°, bevorzugter größer als 120°, ist.

3. Wälzlager (25; 102; 45) nach einem der vorherigen Ansprüche, **dadurch gekennzeichnet, dass** sich die Materialbrücke (94; 194; 294, 295) mit einer konstanten radialen Breite (L94; L194; L294, L295) und entlang eines Kreisbogens erstreckt, der auf der Hauptachse (A72; A172; A44) des Innenrings (72; 172; 272) zentriert ist.

4. Wälzlager (25) nach dem vorherigen Anspruch, **dadurch gekennzeichnet, dass** die radiale Breite (L94) im Wesentlichen gleich wie eine radiale Breite (L90) des Öffnungs (90) ist.

5. Wälzlager (25) nach dem vorherigen Anspruch, **dadurch gekennzeichnet, dass** die radiale Breite (L94) der Materialbrücke (94) weniger als 30 %, vorzugsweise weniger als 20 %, bevorzugter weniger als 10 % eines Radius (R80) der Umfangslaufbahn (80) des Innenrings (72) ist.

6. Wälzlager (25; 45) nach einem der vorherigen Ansprüche, **dadurch gekennzeichnet, dass** sich das Öffnungen (90; 290, 292) zwischen zwei abgerundeten Enden (100) erstreckt, deren Durchmesser gleich wie die Breite (L90; L290, L291) des Öffnungs ist.

7. Wälzlager (24; 102; 45) nach einem der vorherigen Ansprüche, **dadurch gekennzeichnet, dass** die Wälzkörper (76; 176; 276) Rollen sind.

8. Wälzlager (25; 102; 45) nach einem der Ansprüche 1 bis 6, **dadurch gekennzeichnet, dass** die Wälzkörper (76; 176; 276) Kugeln sind.

9. Lager (45) nach einem der vorherigen Ansprüche, **dadurch gekennzeichnet, dass** mehrere Öffnungen (290, 291) in dem Innenring (272) ausgebildet sind.

10. Lager (45) nach dem vorherigen Anspruch, **dadurch gekennzeichnet, dass** der Ring zwei Öffnungen (290, 291) diametral gegenüberliegend in Bezug auf die Mittelachse (A44) umfasst.

11. Wälzlager (102) nach einem der Ansprüche 1 bis 8, **dadurch gekennzeichnet, dass** der Innenring (172) eine Öffnung (190) und zwei Befestigungslöcher (188) umfasst.

12. Ausgangshebel (8) mit nachlaufenden Rollen einer Nockenscharniermechanik, wobei der Hebel mit zwei Rollen (23, 24) ausgestattet ist, **dadurch gekennzeichnet, dass** mindestens eine der Rollen ein Wälzlager (25; 102) nach einem der vorherigen Ansprüche aufweist, wobei der Innenring (72; 172) des Lagers an einem Steg (20) des Hebels oder/und an einem an dem Hebel angebrachten Flansch (22) mittels Befestigungsorganen (36) befestigt ist, wobei der Außenring (74; 174) eine umlaufende Laufbahn (86) mit kreisförmigem Profil aufweist.

13. Fachbildemaschine (2) vom Typ Nockenmaschine, **dadurch gekennzeichnet, dass** sie einen Ausgangshebel (8) nach Anspruch 12 umfasst.

14. Fachbildemaschine (2) nach dem vorherigen Anspruch, **dadurch gekennzeichnet, dass** der Ausgangshebel (8) zwischen einer oberen und einer unteren Position in Abhängigkeit von einem Profil (16, 18) des Nockens (6), das durch Kontakt auf die Umfangslaufbahn (86) einer der Rollen (23, 24) wirkt, um eine Hauptachse (A9) der Nockenmaschine schwingt, wobei der Kontakt in einem radialen Lastbereich hergestellt wird, der mit dem Winkelsektor (99, 199) des Innenrings (72; 172), in dem die Öffnung (90; 190) ausgebildet ist, ausgerichtet ist.

15. Fachbildemaschine (2) vom Typ Nockenmaschine oder vom Typ Schaftmaschine, umfassend ein mechanisches Übertragungssystem (38) zu der Webmaschine, das um Gelenke von zueinander parallelen Achsen (A62, A64, A70) herum aufgebaut ist, **dadurch gekennzeichnet, dass** eines der Gelenke ein Wälzlager (45) nach einem der Ansprüche 1 bis 11 umfasst.

16. Fachbildemaschine (2) nach einem der Ansprüche 14 oder 15, **dadurch gekennzeichnet, dass** die Materialbrücke (94; 194; 294, 295) sich auf beiden Seiten einer Mittellinie erstreckt, die gemäß der maximalen Stärke der Kontaktkraft zwischen der Rolle (23, 24) und dem Nocken (6) gerichtet ist oder gemäß der maximalen Radialkraft auf eines der Gelenke des Übertragungssystems (38) gerichtet ist, das ein Wälzlager (45) umfasst, wobei die maximale Radialkraft der höchsten Radialbelastung entspricht, die während eines Fachbildezyklus auf die Wälzkörper (76; 176; 276) ausgeübt wird.

## Claims

1. Bearing (25; 102; 45) for a shed forming machine or a system for transmitting movement to the frames of a loom, comprising an inner ring (72; 172; 272), an outer ring (74; 174; 274) and rolling elements (76; 176; 276), in which:
- the inner ring is centered on a main axis (A72; A172; A44), comprises two lateral surfaces (78) normal to the main axis and defines a peripheral ring (80; 180; 280) centered on the main axis,
- the outer ring (74; 174; 274) defines an inner ring (82), which is circular and centered on the main axis,
- the rolling elements (76; 176; 276) are interposed, radially with respect to the main axis, between the peripheral ring and the inner ring, so as to guide the outer ring in rotation with respect to the inner ring around the main axis,
**characterized**
- **in that** the inner ring (72; 172; 272) comprises at least one slot (90; 190; 290, 291), opening onto the two lateral surfaces (78), extending opposite a portion of the path of the peripheral bearing (80; 180; 280), and forms a material bridge (94; 194; 294, 295) between the slot and the peripheral ring,
- **in that** the material bridge (94; 194; 294, 295) extends over an angular sector (99; 199; 299, 300) of the inner ring, the angular sector being centered on the main axis (A72 ; A172; A44) of the bearing and having a vertex angle (α1; α2; α3, α4) greater than or equal to the vertex angle (β2) of an angular sector occupied by two rolling elements (76; 176; 276 ), preferably greater than or equal to the vertex angle (β5) of an angular sector occupied by five rolling elements, preferably greater than or equal to the vertex angle (β9) of an angular sector occupied by nine elements rolling elements, more preferably greater than or equal to the vertex angle (β13) of an angular sector occupied by thirteen rolling elements,
- and **in that** the inner ring (72; 172; 272) further comprises at least one hole (88; 188; 288) for fixing the bearing (25; 102; 45).

2. Bearing (25; 102; 45) according to the preceding claim, **characterized in that** the vertex angle (α1; α2; α3, α4) of the angular sector (99; 199; 299, 300) of the inner ring (72; 172; 272) is greater than 20°, preferably greater than 70°, more preferably greater than 120°.

3. Bearing (25; 102; 45) according to any one of the preceding claims, **characterized in that** the material bridge (94; 194; 294, 295) extends with a constant radial width (L94; L194; L294, L295) along an arc of a circle centered on the main axis (A72; A172; A44) of the inner ring (72; 172; 272).

4. Bearing (25) according to the preceding claim, **characterized in that** the radial width (L94) is substantially equal to a radial width (L90) of the slot (90).

5. Bearing (25) according to the preceding claim, **characterized in that** the radial width (L94) of the material bridge (94) is less than 30%, preferably less than 20%, more preferably less than 10% of a radius (R80) of the peripheral ring (80) of the inner ring (72).

6. Bearing (25; 45) according to any one of the preceding claims, **characterized in that** the slot (90; 290; 292) extends between two rounded ends (100) of diameter equal to the width (L90; L290; L291) of the slot.

7. Bearing (24; 102; 45) according to any one of the preceding claims, **characterized in that** the rolling elements (76; 176; 276) are rollers.

8. Bearing (25; 102; 45) according to any one of claims 1 to 6, **characterized in that** the rolling elements (76; 176; 276) are balls.

9. Bearing (45) according to any one of the preceding claims, **characterized in that** a plurality of slots (290, 291) are provided in the inner ring (272).

10. Bearing (45) according to the preceding claim, **characterized in that** the ring comprises two slots (290, 291) diametrically opposed relative to the central axis (A44).

11. Bearing (102) according to any one of claims 1 to 8, **characterized in that** the inner ring (172) comprises a slot (190) and two fixing holes (188).

12. Output lever (8) with cam mechanism follower rollers, the lever being equipped with two rollers (23, 24), **characterized in that** at least one of the rollers comprises a bearing (25; 102) according to any one of the preceding claims, the inner ring (72; 172) of the bearing being fixed to a core (20) of the lever and/or to a flange (22) attached to the lever by means of fixing elements (36), the outer ring (74; 174) having a peripheral rolling track (86) with a circular profile.

13. Shed forming machine (2) of the cam machine type, **characterized in that** it comprises an output lever (8) according to claim 12.

14. Shed forming machine (2) according to the preceding claim, **characterized in that** the output lever (8) oscillates about a main axis (A9) of the cam machine between a high position and a low position according to a profile (16, 18) of the cam (6) acting by contact on the peripheral rolling track (86) of one of the rollers (23, 24), the contact being made in a loading zone radially aligned with the angular sector (99, 199) of the inner ring (72; 172) in which the slot (90; 190) is formed.

15. Shed forming machine (2) of the cam machine type or of the dobby type, comprising a mechanical transmission system (38) to the loom designed around articulations of parallel axes (A62, A64, A70) between them, **characterized in that** one of the articulations comprises a bearing (45) according to one of claims 1 to 11.

16. Shed forming machine (2) according to any one of claims 14 or 15, **characterized in that** the material bridge (94; 194; 294, 295) extends on each side of a center line. directed according to the maximum intensity of the contact force between the roller (23, 24) and the cam (6), or directed according to the maximum radial force on one of the joints of the transmission system (38) which comprises a bearing (45), the maximum radial force corresponding to the radial load applied to the rolling elements (76; 176; 276), being the highest during a shed forming cycle.
